# EUROPEAN PATENT APPLICATION

(11) **EP 2 977 913 A1**
(43) Date of publication of application: **27.01.2016**
(21) Application number: 13879116.5
(22) Date of filing: 23.09.2013
(51) Int. Cl.: G06F 17/25

(54) **TYPE SETTING METHOD AND APPARATUS**

(30) Priority: 19.03.2013 CN 201310088577
(71) Applicant: Xiaomi Inc., Beijing 100085 (CN)
(72) Inventor: ZHANG, Lei, Beijing 100085 (CN)
(74) Representative: Delumeau, François Guy
(86) International application number: PCT/CN2013/084008
(87) International publication number: WO 2014/146414

(57) **Abstract**

Disclosed in the present invention are a typesetting method and apparatus, the method comprising the following steps: paginating a file; when blank areas exist in pages after the file is paginated, determining, in the file, adjustable elements which lead to the blank areas; and exchanging the typesetting sequences of the adjustable elements and neighboring elements in the file to determine the typesetting sequence, which is obtained when the blank areas are reduced, as the final typesetting sequence. According to the typesetting method provided in the embodiment of the present invention, the blank areas, when appearing on the pages, are reduced by adjusting the typesetting sequence of the elements capable of adjusting the typesetting sequence in the file, thereby avoiding the problem that wide-range blanks appear in the pagination result.

## Description

### TECHNICAL FIELD

The present disclosure relates to the field of data processing, and particularly to a method and a device for typesetting.

### BACKGROUND

Today, with rapid change of science and technology, especially accompanied by a rapid development of internet technology, people develop a reading habit no longer limited to reading the traditional paper publication. Electronic reading has been very popular and the proportion thereof is gradually increasing. Because of the portability of electronic reading terminals (such as e-books, mobile phones, panel computers, etc.), people can enjoy electronic reading in fragmental time of their lives, such as when being on a bus or in a subway, and even can enjoy electronic reading in a few minutes when waiting in line for tickets.

When presenting a document, an electronic reading terminal generally adopts a method that presents the document page by page, to provide a feeling close to reading paper books. Kinds of electronic reading terminals have different sizes of screens, and the same electronic reading terminal can also set different sizes of display fonts. Therefore, it is required that an electronic reading terminal shall be capable of flexibly paginating a document to be displayed.

However, due to the fact that there may be uninterruptible elements in a document, such as pictures, etc., when there is no sufficient space remained on a page after being paginated, a picture may only be assigned to the succeeding page to be displayed, which causes a wide range of blank area appearing on the page after being paginated.

### SUMMARY

In view of this, an object of the embodiments of the disclosure is to provide a method and a device for typesetting that may be effectively reduce the situation that a wide range of blank appears in pages after being paginated.

In order to achieve the above object, in one aspect, an embodiment of the disclosure provides a method for typesetting, comprising the following steps:
paginating a document into a plurality of pages;
if a page of the plurality of pages contains a blank area after the paginating, determining an adjustable element in the document that causes the blank area; and
transposing a typesetting sequence of the adjustable element with a typesetting sequence of an adjacent element in the document, and determining that the typesetting sequences according to which the blank area is reduced are final typesetting sequences.
With the method for typesetting proposed by the embodiments of the disclosure, when a blank area appears on a page of a document, the problem that a wide range of blank appears in a result of paginating may be avoided by adjusting the typesetting sequences of adjustable elements in the document to reduce the blank area.

As a preferred one of the above technical resolutions, the step of transposing the typesetting sequence of the adjustable element with the typesetting sequence of the adjacent element in the document comprises: transposing a typesetting sequence number of the adjustable element with a typesetting sequence number of the adjacent element; rearranging the elements in the document according to the transposed typesetting sequence numbers; and re-paginating the document beginning from the page on which the element preceding the adjustable element exists. By this resolution, it may be realized to transpose a typesetting sequence of an adjustable element with a typesetting sequence of an adjacent element in a document effectively.

As a preferred one of the above technical resolutions, after the re-paginating of the document, the method further comprises: recording a size of the blank area; and determining that the typesetting sequences of the elements in the document are the final typesetting sequences if the blank area is less than or equals a preset threshold; or determining that the typesetting sequences of the elements in the document are the final typesetting sequences if the blank area is minimal. By this resolution, a blank area may be reduced to a preset threshold or to minimum.

As a preferred one of the above technical resolutions, the step of transposing the typesetting sequence of the adjustable element with the typesetting sequence of the adjacent element in the document comprises: transposing the typesetting sequence of the adjustable element with the typesetting sequence of the adjacent element in the document within an adjusting range of the adjustable element. By this resolution, it may be secured to reduce a blank area without destroying the logic in the context of the document.

As a preferred one of the above technical resolutions, the adjusting range comprises a forward-adjusting range and a backward-adjusting range. Therefore an adjustable element may be adjusted forward or backward.

As a preferred one of the above technical resolutions, the step of paginating the document into the plurality of pages comprises: obtaining a number of characters to be displayed on a display of a terminal according to a screen size of the terminal and a front size of the characters; and paginating the document according to the number of characters to be displayed on the display of the terminal. By this resolution, the paginating may be conducted flexibly according to different display settings.

In another aspect, a device for typesetting is further proposed by an embodiment of the disclosure, which comprises:
a paginating module, configured to paginate a document into a plurality of pages;
a determining module, configured to determine an adjustable element in the document that causes a blank area if a page of the plurality of pages contains the blank area after the pagination; and
an adjusting module, configured to adjust a typesetting sequence of the adjustable element with a typesetting sequence of an adjacent element, and to determine that the typesetting sequences are final typesetting sequences if the blank area is reduced.

As a preferred one of the above technical resolutions, the adjusting module comprises:
a transposing unit, configured to transpose a typesetting sequence number of the adjustable element with a typesetting sequence number of the adjacent element;
an arranging unit, configured to rearrange the elements according to the transposed typesetting sequence numbers; and
a first paginating unit, configured to re-paginate the document beginning from the page on which the element preceding the adjustable element exists.

As a preferred one of the above technical resolutions, the adjusting module further comprises:
a recording unit, configured to record a size of the blank area after the paginating;
a determining unit, configured to determine that the typesetting sequences of the elements in the document are the final typesetting sequences if the blank area equals or is less than a preset threshold, or to determine that the typesetting sequences of the elements in the document are the final typesetting sequences when the blank area is minimal.

As a preferred one of the above technical resolutions, the adjusting module is configured to: transpose the typesetting sequence of the adjustable element with the typesetting sequence of the adjacent element in the document within an adjusting range of the adjustable element.

As a preferred one of the above technical resolutions, the adjusting range comprises a forward-adjusting range and a backward-adjusting range.

As a preferred one of the above technical resolution, the paginating module comprises:
a number-of-characters obtaining unit, configured to obtain a number of characters to be displayed on a display of a terminal according to a screen size of the terminal and a font size of the characters; and
a second paginating unit, configured to paginate the document according to the number of characters to be displayed on the display of the terminal.

Other features and advantages of the embodiments of the disclosure will be set forth in the following specification. Moreover, it will become apparent partly from the specification, or be understood by implementing the disclosure. The object and other advantages of the disclosure may be realized and achieved by structures specially specified in the written specification, the claims and the accompanying drawings.

It should be understood that, the general description above and the detailed description below are merely exemplary, and do not limit the disclosure.

Hereinafter, a further detailed description will be given of the technical solution of the embodiments of the disclosure in reference to the accompanying drawings and the embodiments.

### BRIEF DESCRIPTION OF THE DRAWINGS

The accompanying drawings are used for further illustrating the embodiments of the disclosure, and constitute a part of this specification, and together with the embodiments of the disclosure, serve to explain the present disclosure while not limiting the embodiments of the disclosure. In the drawings:
Fig.1 is a main exemplary flowchart of a method for typesetting according to an embodiment of the disclosure;
Fig.2 is an exemplary flowchart of a method for typesetting that adjusts forward an adjustable element, according to an embodiment of the disclosure;
Fig.3 is a schematic view of an exemplary document after being paginated, according to an embodiment of the disclosure;
Fig.4 is a schematic view of re-paginating after performing once an operation that adjusts forward an adjustable element X in Fig.3;
Fig.5 is a schematic view of re-paginating after performing once more the operation that adjusts forward the adjustable element X in Fig.4;
Fig.6 is an exemplary flowchart of a method for typesetting that adjusts backward an adjustable element, according to an embodiment of the disclosure;
Fig.7 is a schematic view of re-paginating after performing once an operation that adjusts backward the adjustable element X in Fig.3;
Fig.8 is a schematic view of re-paginating after performing once more the operation that adjusts backward the adjustable element X in Fig.4;
Fig.9 is an exemplary flowchart of a method for typesetting that adjusts forward and backward adjustable elements, according to an embodiment of the disclosure;
Fig.10 is a schematic view of a main structure of a device for typesetting according to an embodiment of the disclosure.

### DETAILED DESCRIPTION

Hereinafter, preferred embodiments of the disclosure will be described in reference to the accompanying drawings. It should be understood that the preferred embodiments described herein are used merely to illustrate and explain rather than to limit the embodiments of the disclosure.

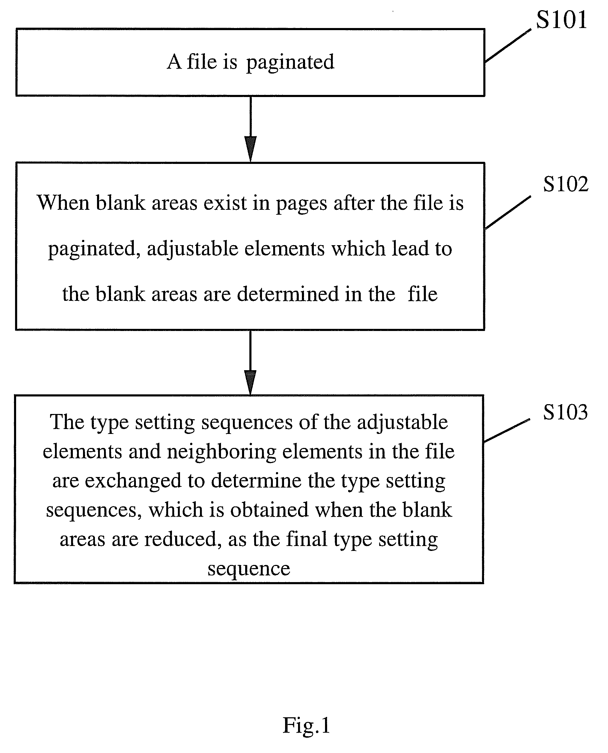

As illustrated in Fig.1, a main process of a method for typesetting according to an embodiment of the disclosure includes:

Step S101: paginating a document into a plurality of pages.

Preferably, when paginating the document into the plurality of pages, obtaining a number of characters to be displayed on a display of a terminal according to a screen size of the terminal and a font size of the characters, and then paginating the document according to the number of characters to be displayed on the display of the terminal.

Step S102: if a page of the plurality of pages of the document contains a blank area after the paginating, determining an adjustable element in the document that causes the blank area.

Each separate part of the document is an element respectively. For example, a title, a paragraph of text, a picture, a table, a formula, a link, a widget, etc. is an element respectively.

An adjustable element refers to an element whose typesetting sequence in a document may be adjusted. For example, some pictures in a document are adjustable elements. Adjustable elements include but are not limited to: pictures, tables, formulas, etc., which can be transposed to be before or after an adjacent text. While some elements such as a title, are not adjustable elements because their typesetting sequences can not be adjusted.

A method for determining an adjustable element that causes the said blank area in a document may be in the following manner: determining whether the first element of the page succeeding a page on which the said blank area exists is an adjustable element; and if the first element is an adjustable element, the first element is recognized as an adjustable element that causes the said blank area.

Step S103: transposing the typesetting sequence of the said adjustable element with that of its adjacent element in the document, and determining that the typesetting sequences according to which the blank area may be reduced are final typesetting sequences.

Preferably, an adjustable element has an adjusting range. An adjusting range refers to times that an adjustable element can be transposed forward or backward. Transposing a position of the adjustable element within the adjusting range of the adjustable element may reduce the blank area without destroying the logic in the context of the document.

With the method for typesetting proposed by the embodiments of the disclosure, when a blank area appears on a page of a document, the problem that a wide range of blank appears in a result of paginating may be avoided by adjusting typesetting sequences of adjustable elements in the document to reduce the blank area.

In another embodiment of the disclosure, a method for typesetting includes: paginating a document into a plurality of pages; if a page of the plurality of pages of the document contains a blank area after the paginating, determining an adjustable element that causes the said blank area in the document and recording the size of the blank area; transposing a typesetting sequence number of the adjustable element with that of its adjacent element, and rearranging the elements in the document according to the transposed typesetting sequence numbers; then re-paginating the document beginning from a page on which the element preceding the said adjustable element exists; if the size of the blank area after the re-paginating is smaller than the previously recorded size of the blank area, determining that the typesetting sequence numbers at this time are final typesetting sequences, or if the size of the blank area after the re-paginating is greater than or equals the previously recorded size of the blank area, transposing the typesetting sequence number of the adjustable element with that of its adjacent element once more and re-paginating once more, till the blank area becomes smaller.

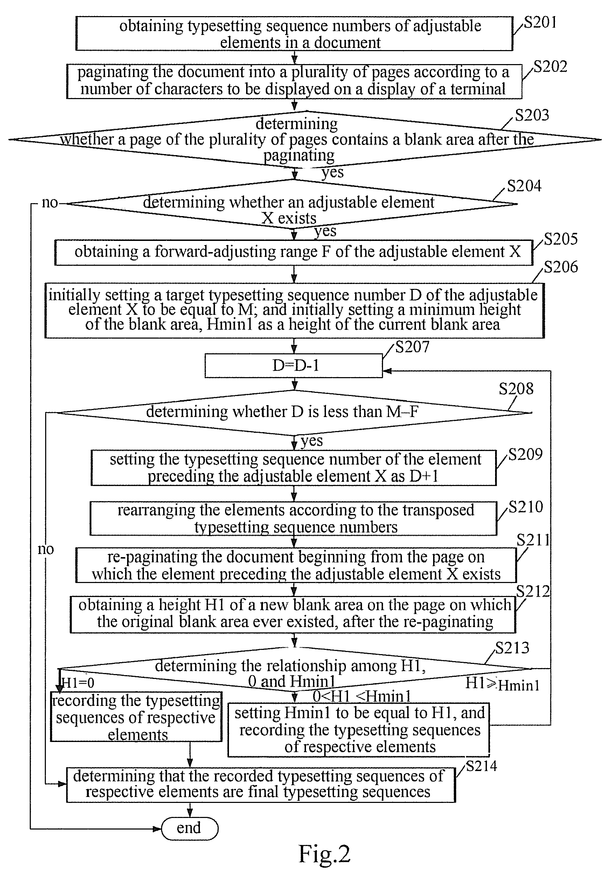

As illustrated in Fig.2, a process of a method for typesetting that adjusts forward an adjustable element according to an embodiment of the disclosure, includes the following steps:

Step S201: obtaining typesetting sequence numbers of adjustable elements in a document.

Elements of a document may be classified in advance. For example, they may be classified into titles, texts, pictures, etc., and then the elements of "picture" class are considered as adjustable elements.

In order to be accurate, it may be determined in advance which elements are adjustable elements in the document by adopting artificial marking, since not all pictures can be adjusted in terms of their typesetting sequences.

Step S202: paginating the document into a plurality of pages according to a number of characters to be displayed on the display of the terminal.

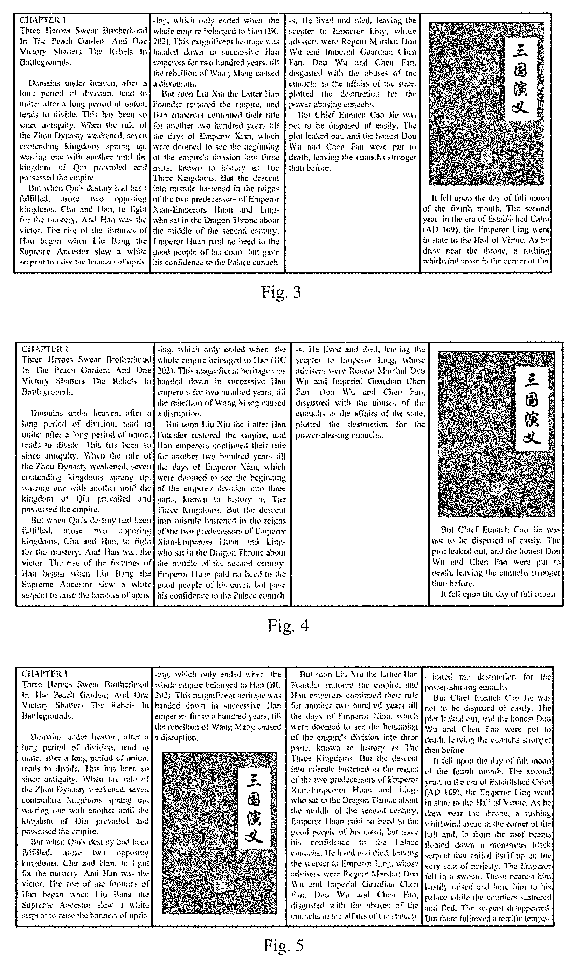

As illustrated in Fig.3, a schematic view of a document after being paginated, shows 6 consecutive pages: page 1 to page 6.

Step S203: determining whether a page of the plurality of pages of the document contains a blank area after the paginating; if it is yes, performing step S204; and if it is no, program ends.

In another embodiment of the disclosure, it may be further determined whether a height of a blank area is greater than a preset threshold (a preset threshold may be, for example, a value greater than 0 and less than the initial height of the blank area). Only if the height of the blank area is greater than the preset threshold, shall the above steps be subsequently conducted to perform an adjusting, to eventually enable the height of the blank area less than or equivalent to the preset threshold. This solution ignores small blank areas while reducing large ones, which sacrifices a small quantity of effect but improves processing efficiency.

As shown in Fig.3, a blank area exists on page 3 after being paginated.

Step S204: determining whether an adjustable element X exists: determining whether the first element on the page succeeding the page on which the blank area exists is an adjustable element X, according to a typesetting sequence number M of the first element on the page succeeding the page on which the blank area exists, and the typesetting sequence numbers of adjustable elements obtained in the step S201; if it is yes, performing step S205, or if it is no, program ends.

As shown in the Fig.3, the first element on the succeeding page, i.e. page 4, to the page 3 on which the blank area exists is a picture, the typesetting sequence number M of the picture is 6, and it is assumed that the typesetting sequence numbers obtained in the step S201 include a 6, then the picture is recognized as the adjustable element X.

Step S205: obtaining a forward-adjusting range F of the adjustable element X.

The forward-adjusting range F expresses a range within which an adjustable element may be adjusted forward, i.e. times that an adjustable element may be transposed with its preceding adjacent element.

An adjusting range of an adjustable element may be a preset fixed range. If it needs more accuracy, an adjusting range of an adjustable element may be obtained by adopting artificial marking.

Here, the forward-adjusting range F of the adjustable element X in Fig.3 is set as 3.

Step S206: initially setting a target typesetting sequence number D of the adjustable element X to be equal to M, and initially setting a minimum height of the blank area, Hmin1 as a height of the current blank area.

Step S207: D=D-1.

Step S208: determining whether D is less than M-F. If it is yes, performing step S209, or if it is no, performing step S214.

Step S209: setting a typesetting sequence number of the element preceding the adjustable element X as D+1.

Step S210: rearranging the elements, the sequence numbers of which have changed, according to the transposed typesetting sequence numbers.

Step S211: re-paginating the document beginning from the page on which the element preceding the adjustable element X exists.

Step S212: obtaining a height H1 of a new blank area on the page on which the original blank area ever existed, after the re-paginating.

Step S213: determining the relationship among H1, 0 and Hmin1.

If H1 equals to 0, performing Step S214 after recording the typesetting sequences of respective elements.

If H1 is greater than or equals to Hmin1, performing the Step S207.

If H1 is less than Hmin1 and does not equal to 0, setting Hmin1 to be equal to H1, and performing the Step S207 after recording the typesetting sequences of respective elements.

Step S214: determining that the recorded typesetting sequences of respective elements are the final typesetting sequences.

For example, the picture on page 4 in Fig.3 is the adjustable element X, and the adjustable range of the picture is set as F=3, B=3. Firstly, the picture is adjusted forward, and as illustrated in Fig.4, it is a typesetting case of page 1 to page 4 after adjusting forward the picture once. The typesetting sequence of the picture in the document changes from 6 to 5, while the blank area on the page 3 still exists. As illustrated in Fig.5, it is a typesetting case of page 1 to page 4 after adjusting forward the picture once more. The typesetting sequence of the picture in the document changes from 5 to 4, and at this time, no blank area exists on the page 3. The final typesetting sequences are determined as: the typesetting sequence of the element with the original typesetting sequence 6 changes to 4, the typesetting sequence of the element with the original typesetting sequence 4 changes to 5, and the typesetting sequence of the element with the original typesetting sequence 5 changes to 6.

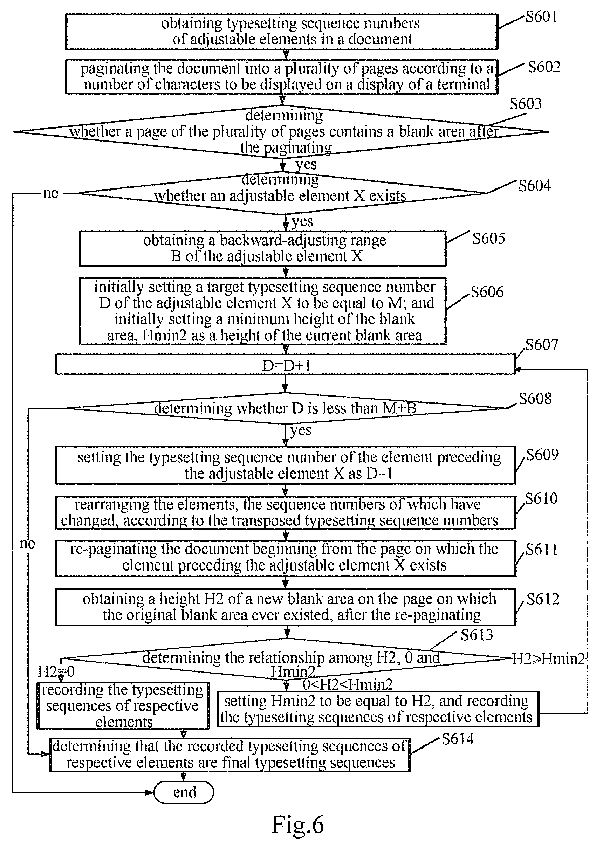

As illustrated in Fig.6, it is a process of a method for typesetting that transposes backward an adjustable element according to an embodiment of the disclosure, which includes the following steps:

Step S601: obtaining typesetting sequence numbers of adjustable elements in a document.

Step S602: paginating the document into a plurality of pages according to a number of characters to be displayed on a display of a terminal.

As illustrated in Fig.3, it is a schematic view of a document after being paginated, shows consecutive pages: page 1 to page 6.

Step S603: determining whether a page of the plurality of pages contains a blank area after the paginating. If it is yes, performing step S604; or it is no, going to end.

As shown in the Fig.3, a blank area exists on page 3 after being paginated.

Step S604: determining whether an adjustable element X exists: determining whether the first element on the page succeeding the page on which the blank area exists is an adjustable element X, according to a typesetting sequence number M of the first element on the page succeeding the page on which the blank area exists and the typesetting sequence numbers of adjustable elements obtained in the step S601. If it is yes, performing step S605, or if it is no, program ends.

As shown in the Fig.3, the first element on the page, i.e. page 4, succeeding page 3 on which a blank area exists, is a picture, the typesetting sequence number M of the picture is 6, and it is assumed that the typesetting sequence numbers obtained in step S601 include a 6, then the picture is recognized as the adjustable element X.

Step S605: obtaining a backward-adjusting range B of the adjustable element X.

The forward-adjusting range B expresses a range within which an adjustable element may be adjusted backward, i.e. times that an adjustable element may be transposed with its succeeding adjacent element.

Here, the backward-adjusting range B of the adjustable element X in Fig.3 is set as 3.

Step S606: initially setting a target typesetting sequence number D of the adjustable element X to be equal to M, and initially setting a minimum height of the blank area, Hmin2 as a height of the current blank area.

Step S607: D=D+1.

Step S608: determining whether D is less than M+B. If it is yes, performing step S609, or if it is no, performing step S208.

Step S609: setting a typesetting sequence number of the element succeeding the adjustable element X as D-1.

Step S610: rearranging elements, the sequence numbers of which have changed, according to the transposed typesetting sequence numbers.

Step S611: re-paginating the document beginning from the page on which the element preceding the adjustable element X exists.

Step S612: obtaining a height H2 of a new blank area on the page on which the original blank area ever existed, after the re-paginating.

Step S613: If H2 equals to 0, performing Step S614 after recording the typesetting sequences of respective elements; if H2 is greater than or equals to Hmin2, performing the Step S607; if H2 is greater than 0 and less than Hmin2, setting Hmin2 to be equal to H2, and performing the Step S607 after recording the typesetting sequences of respective elements.

Step S614: determining that the recorded typesetting sequences of respective elements are the final typesetting sequences.

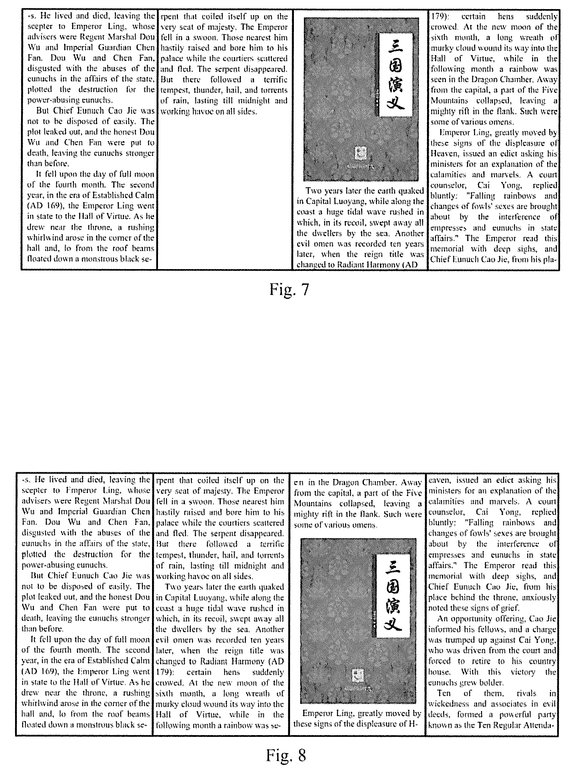

For example, the picture on page 4 in Fig.3 is the adjustable element X, and the adjustable range of the picture is set as F=3, B=3. The picture is adjusted backward, and as illustrated in Fig.7, it is a typesetting case of page 3 to page 6 after adjusting backward the picture once. At this time, the typesetting sequence of the picture in the document changes from 6 to 7, while a blank area on the page 3 still exists. As illustrated in Fig.8, it is a typesetting case of page 3 to page 6 after adjusting backward the picture once more. At this time, the typesetting sequence of the picture in the document changes from 7 to 8, and no blank area exists on the page 3.

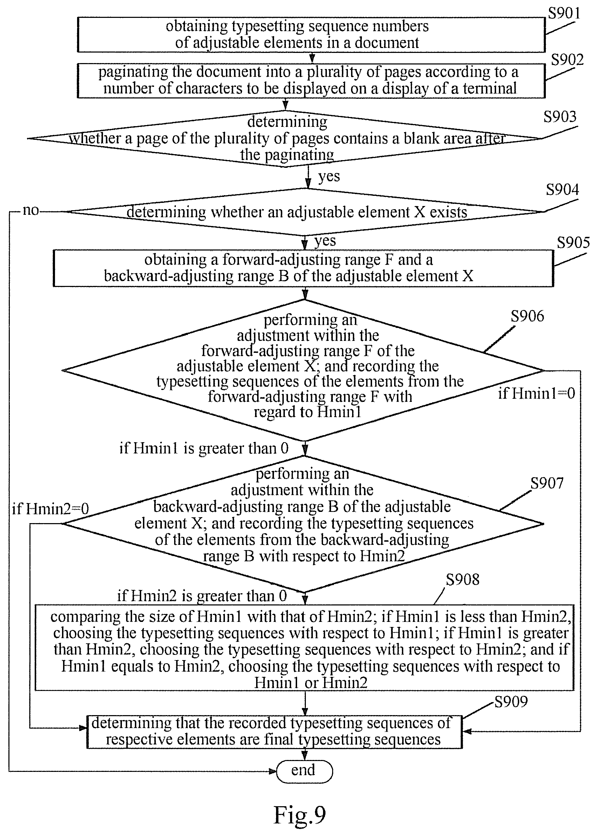

As illustrated in Fig.9, there is a process of a method for typesetting that includes adjusting forward and backward an adjustable element according to an embodiment of the disclosure, which includes the following steps:

Step S901: obtaining typesetting sequence numbers of adjustable elements in a document.

Step S902: paginating the document into a plurality of pages according to a number of characters to be displayed on a display of a terminal.

Step S903: determining whether a page of the plurality of pages contains a blank area after the paginating. If it is yes, performing step S904; or if it is no, program ends.

Step S904: determining whether an adjustable element X exists: determining whether the first element on the page succeeding the page on which the blank area exists is an adjustable element X, according to a typesetting sequence number M of the first element on the page succeeding the page on which the blank area exists and the typesetting sequence numbers of adjustable elements obtained in the step S901. If it is yes, performing step S905, or it is no, program ends.

Step S905: obtaining a forward-adjusting range F and a backward-adjusting range B of the adjustable element X.

Step S906: performing an adjustment within the forward-adjusting range F of the adjustable element X; recording the typesetting sequences of respective elements from the forward-adjusting range F, according to which the blank area is minimal (Hmin1); if the blank area still exists, performing step S907; and if the blank area becomes 0, performing step S909.

This step S909 may include:

Step S9061: initially setting a target typesetting sequence number D of the adjustable element X to be equal to M, and initially setting a minimum height Hmin1 as a height of the blank area.

Step S9062: D=D-1.

Step S9063: determining whether D is less than M-F. If it is yes, performing step S9064, or if it is no, performing step S907.

Step S9064: setting the typesetting sequence number of the element preceding the adjustable element X as D+1.

Step S9065: rearranging the elements, the sequence numbers of which have changed, according to the transposed typesetting sequence numbers.

Step S9066: re-paginating the document beginning from the page on which the element preceding the adjustable element X exists.

Step S9067: obtaining the height H1 of a new blank area on the page on which the original blank area ever existed, after the re-paginating.

Step S9068: If H1 equals to 0, performing Step S909 after recording the typesetting sequences of respective elements; If H1 is greater than Hmin1, performing the Step S9062; and if H1 is less than Hmin1 and does not equal to 0, setting Hmin1 to be equal to H1, and performing the Step S9062 after recording the typesetting sequences of respective elements.

Step S907: performing an adjustment within the backward-adjusting range B of the adjustable element X; recording the typesetting sequences of respective elements from the backward-adjusting range B, according to which the blank area is minimal (Hmin2); if Hmin2 is greater than 0, performing step S908; and if Hmin2 equals to 0, performing the step S909.

Preferably, the Step S907 includes:

Step S9071: initially setting a target typesetting sequence number D of the adjustable element X to be equal to M, and initially setting a minimum height Hmin2 as a height of the blank area.

Step S9072: D=D+1.

Step S9073: determining whether D is less than M+B. If it is yes, performing step S9074; or if it is no, performing the step S908.

Step S9074: setting the typesetting sequence number of the element preceding the adjustable element X as D-1.

Step S9075: rearranging the elements, the sequence numbers of which have changed, according to the transposed typesetting sequence numbers.

Step S9076: re-paginating the document beginning from the page on which the element preceding the adjustable element X exists.

Step S9077: obtaining the height H2 of a new blank area on the page on which the original blank area ever existed, after the re-paginating.

Step S9078: if H2 equals to 0, performing the Step S909 after recording the typesetting sequences of respective elements; if H2 is greater than Hmin2, performing Step S9092; and if H2 is less than Hmin1 and does not equal to 0, setting Hmin2 to be equal to H2, and performing the Step S9092 after recording the typesetting sequences of respective elements.

Step S908: comparing the size of Hmin1 with that of Hmin2; if Hmin1 is less than Hmin2, choosing the typesetting sequences of respective elements recorded with respect to Hmin1; if Hmin1 is greater than Hmin2, choosing the typesetting sequences of respective elements recorded with respect to Hmin2; and if Hmin1 equals to Hmin2, choosing the typesetting sequences of respective elements recorded with respect to Hmin1 or Hmin2.

Step S909: determining that the recorded typesetting sequences of respective elements are the final typesetting sequences.

In the embodiment described above, the performing sequence of the Step S906 and the Step S907 is adjustable.

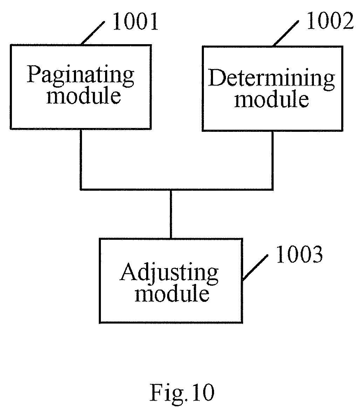

A device for typesetting is further provided in an embodiment of the disclosure, and as illustrated in Fig.10, the device includes:

paginating module 1001, configured to paginate a document into a plurality of pages;

determining module 1002, configured to determine an adjustable element in the document that causes a blank area if a page of the plurality of pages contains the said blank area after the pagination;

adjusting module 1003, configured to adjust a typesetting sequence of the said adjustable element and that of its adjacent element, and to determine that the typesetting sequences according to which the blank area may be reduced are final typesetting sequences.

Preferably, the adjusting module 1003 includes:

a transposing unit, configured to transpose a typesetting sequence number of the said adjustable element with that of its adjacent element;

an arranging unit, configured to rearrange the elements in the document according to the transposed typesetting sequence numbers;

a first paginating unit, configured to re-paginate the document beginning from the page on which the element preceding the said adjustable element exists.

Preferably, the said adjusting module further includes:

a recording unit, configured to record a size of the said blank area after the paginating;

a determining unit, configured to determine that the typesetting sequences of the elements in the document, according to which the said blank area equals to or is less than a preset threshold, are the final typesetting sequences, or to determine that the typesetting sequences of the elements in the document, according to which the said blank area is minimal, are the final typesetting sequences.

Preferably, adjusting module 1003 is configured to: transpose the typesetting sequence of the said adjustable element with that of its adjacent element in the document within an adjusting range of the said adjustable element, so as to reduce the said blank area.

Preferably, the said adjusting range includes a forward-adjusting range and a backward-adjusting range.

Preferably, the paginating module 1001 includes:

a number-of-characters obtaining unit, configured to obtain a number of characters to be displayed on a display of a terminal according to a screen size of the terminal and a font size of the characters;

a second paginating unit, configured to paginate the document into a plurality of pages according to the number of characters to be displayed on the display of the terminal.

It should be understood by those skilled in the art, that the embodiments of this disclosure may be provided as methods, systems or computer program products. Therefore, the disclosure may adopt embodiments in forms of hardware only, software only, or a combination of software and hardware. Furthermore, the disclosure may adopt forms of computer program products executed on one or more computer usable storage media (including but not being limited to disk storage and optical storage, etc.) containing computer usable program codes.

The disclosure is described in reference to the method, the device (system) and the flowchart and/or a block diagram of a computer program product according to the embodiments of the disclosure. It should be understood that each process and/or block in the flowcharts and/or block diagrams, and combinations of processes and/or blocks in the flowcharts and/or block diagrams, may be realized by computer program instructions. These computer program instructions may be provided to a generate-purpose computer, a special-purpose computer, an embedded processor, or processors of other programmable data processing devices, to create a machine, such that a device for realizing functions designated in one or more processes in the flowcharts and/or in one or more blocks in the block diagrams, may be created by instructions performed by a computer or processors of other programmable data processing devices.

These computer program instructions may further be stored in a computer readable storage medium that can boot a computer or other programmable data processing devices to work in a specific way, such that a manufactured article comprising an instruction device may be created by the instructions stored in the said computer readable storage medium, and the said instruction device realizes the functions designated in one or more processes in the flowcharts and/or in one or more blocks in the block diagrams.

These computer program instructions may further be loaded into a computer or other programmable data processing devices, such that a series of operating steps may be performed on the computer or other programmable data processing devices, so as to generate processes realized by the computer, such that steps for realizing the functions designated in one or more processes in the flowcharts and/or in one or more blocks in the block diagrams may be provided by the instructions executed on the computer or other programmable data processing devices.

Clearly, those skilled in the art may make various modifications and variations to the disclosure without departing the spirit and scope of the disclosure. Thus, the disclosure intends to include these modifications and variations if they belong to the scope of the claims of the disclosure and the equivalent technology thereof.

## Claims

1. A method for typesetting, **characterized in** comprising:
paginating a document into a plurality of pages;
if a page of the plurality of pages contains a blank area after the paginating, determining an adjustable element in the document that causes the blank area; and
transposing a typesetting sequence of the adjustable element with a typesetting sequence of an adjacent element in the document, and determining that the typesetting sequences according to which the blank area is reduced are final typesetting sequences.

2. The method according to claim 1, **characterized in that**, the step of transposing the typesetting sequence of the adjustable element with the typesetting sequence of the adjacent element in the document comprises:
transposing a typesetting sequence number of the adjustable element with a typesetting sequence number of the adjacent element;
rearranging the elements in the document according to the transposed typesetting sequence numbers; and
re-paginating the document beginning from the page on which the element preceding the adjustable element exists.

3. The method according to claim 2, **characterized in that**, the method further comprises:
recording a size of the blank area after the paginating; and
determining that the typesetting sequences of the elements in the document are the final typesetting sequences if the blank area is less than or equals a preset threshold, or determining that the typesetting sequences of the elements in the document are the final typesetting sequences if the blank area is minimal.

4. The method according to claim 1, **characterized in that**, the step of transposing the typesetting sequence of the adjustable element with the typesetting sequence of the adjacent element in the document comprises:
transposing the typesetting sequence of the adjustable element with the typesetting sequence of the adjacent element in the document within an adjusting range of the adjustable element.

5. The method according to claim 4, **characterized in that**, the adjusting range comprises a forward-adjusting range and a backward-adjusting range.

6. The method according to claim 1, **characterized in that**, the step of paginating the document into the plurality of pages comprises:
obtaining a number of characters to be displayed on a display of a terminal according to a screen size of the terminal and a front size of the characters; and
paginating the document according to the number of characters to be displayed on the display of the terminal.

7. A device for typesetting, **characterized in** comprising:
a paginating module, configured to paginate a document into a plurality of pages;
a determining module, configured to determine an adjustable element in the document that causes a blank area if a page of the plurality of pages contains the blank area after the pagination; and
an adjusting module, configured to adjust a typesetting sequence of the adjustable element and a typesetting sequence of an adjacent element, and to determine that the typesetting sequences according to which the blank area is reduced are final typesetting sequences.

8. The device according to claim 7, **characterized in that**, the adjusting module comprises:
a transposing unit, configured to transpose a typesetting sequence number of the adjustable element with a typesetting sequence number of an adjacent element;
an arranging unit, configured to rearrange the elements according to the transposed typesetting sequence numbers; and
a first paginating unit, configured to re-paginate the document beginning from the page on which the element preceding the adjustable element exists.

9. The device according to claim 8, **characterized in that**, the adjusting module further comprises:
a recording unit, configured to record a size of the blank area after the pagination; and
a determining unit, configured to determine that the typesetting sequences of the elements in the document are the final typesetting sequences if the blank area equals or is less than a preset threshold, or to determine that the typesetting sequences of the elements in the document are the final typesetting sequences if the blank area is minimal.

10. The device according to claim 7, **characterized in that**, the adjusting module is configured to: transpose the typesetting sequence of the adjustable element with the typesetting sequence of the adjacent element in the document within an adjusting range of the adjustable element.

11. The device according to claim 10, **characterized in that**, the adjusting range comprises a forward-adjusting range and a backward-adjusting range.

12. The device according to claim 7, **characterized in that**, the paginating module comprises:
a number-of-characters obtaining unit, configured to obtain a number of characters to be displayed on a display of a terminal according to a screen size of the terminal and a font size of the characters; and
a second paginating unit, configured to paginate the document according to the number of characters to be displayed on the display of the terminal.
